Europäisches Patentamt

European Patent Office

Office européen des brevets

(11) Veröffentlichungsnummer: **0 342 268 B1**

(12) **EUROPÄISCHE PATENTSCHRIFT**

(45) Veröffentlichungstag der Patentschrift: **24.06.92**

(51) Int. Cl.⁵: **G01B 1/00**

(21) Anmeldenummer: **88118386.7**

(22) Anmeldetag: **04.11.88**

(54) Langgestreckter Gegenstand hoher Formbeständigkeit und geringer Wärmeausdehnung.

(30) Priorität: **20.05.88 DE 3817174**

(43) Veröffentlichungstag der Anmeldung:
**23.11.89 Patentblatt 89/47**

(45) Bekanntmachung des Hinweises auf die
Patenterteilung:
**24.06.92 Patentblatt 92/26**

(84) Benannte Vertragsstaaten:
**DE FR GB IT NL**

(56) Entgegenhaltungen:
**DE-A- 3 503 779**
**FR-A- 2 512 542**
**US-A- 4 282 688**

(73) Patentinhaber: **URANIT GmbH**
**Stetternicher Staatsforst**
**W-5170 Jülich(DE)**

(72) Erfinder: **Corr, Horst**
**Nordring 47e**
**W-5132 Übach-Palenberg(DE)**
Erfinder: **Hackenberg, Rudolf**
**Zur Kalkbahn**
**W-5163 Langerwehe-Jüngersdorf(DE)**
Erfinder: **Schmitz, Bernd-Horst**
**Obersteinstrasse 58**
**W-5190 Stolberg(DE)**

(74) Vertreter: **Gottlob, Peter**
**Kernforschungszentrum Karlsruhe GmbH**
**Abt. PAL Weberstrasse 5 Postfach 3640**
**W-7500 Karlsruhe 1(DE)**

# Beschreibung

Die Erfindung betrift einen langgestreckten Gegenstand hoher Formbeständigkeit und geringer Wärmeausdehnung gemäß dem Oberbegriff von Patentanspruch 1.

Aus der US-A-4,282,688 ist eine aus zwei Abschnitten zusammengesetzte Strebe bekannt, bei der die beiden Abschnitte aus mehreren Schichten eines Kohlenstoff-Epoxidharz-Verbundlaminats gewickelt sind. Um den Wärmeausdehnungskoeffizienten der Strebe möglichst klein zu halten, werden die Schichten für die beiden Abschnitte mit unterschiedlichen Wickelwinkeln gewickelt in der Weise, daß die Gesamtausdehnung oder -kontraktion der Strebe gegen Null geht. Die Realisierung dieser Methode ist jedoch sehr aufwendig und schlecht reproduzierbar, da im Zuge der Herstellung von jedem Abschnitt Proben entnommen werden müssen, um daran individuell die unterschiedlichen Wärmeausdehnungskoeffizienten zu ermitteln. Auch sind die stirnseitigen Enden dieser Strebe stoß- und abriebempfindlich, was deren praktische Einsatzmöglichkeiten einschränkt.

Ein gattungsgemäßer Gegenstand in Form eines Längenmeßwerkzeuges ist in der DE-A-31 35 585 beschrieben. Er besteht aus keramischem oder faserverstärktem Werkstoff. Als faserverstärkte Werkstoffe werden kohlenfaser- und glasfaserverstärkte Kunststoffe genannt, wobei darauf hingewiesen wird, daß die Kohlenfasern einen negativen, die Glasfasern einen positiven Wärmeausdehnungskoeffizienten haben. Ferner wird erwähnt, daß Meßwerkzeuge aus diesen Werkstoffen sehr formstabil sind und eine geringe Wärmeausdehnung haben. Über die Art der Herstellung derartiger Meßwerkzeuge wird jedoch in dieser Druckschrift nichts ausgesagt.

Die Erfindung hat zur Aufgabe, Gegenstände wie Längenmeßwerkzeuge, insbesondere End- oder Eichmaße, oder Prüf- oder Geberkörper der gattungsgemäßen Art so zu gestalten, daß die danach hergestellten Erzeugnisse bei Temperaturschwankungen praktisch keine Längenänderungen erfahren und unempfindlich gegen Stöße und Abrieb sind.

Diese Aufgabe wird mit den im Kennzeichen von Anspruch 1 enthaltenen Merkmalen gelöst. Die hierauf bezogenen abhängigen Ansprüche beinhalten vorteilhafte Ausgestaltungen dieser Lösung.

Da Kohlenstoffasern und Aramidfasern, bezogen auf ihre Längserstreckung, einen negativen Wärmeausdehnungskoeffizienten haben, bewirkt die Kreuzwicklung bei Temperaturerhöhung tendenzmäßig eine Verkürzung des Hohlzylinders. Dem wirken die Kunststoffmatrix und die Endstücke mit ihren positiven Wärmeausdehnungskoeffizienten entgegen, so daß bei richtiger Wahl des Wickelwinkels eine Kompensation eintritt, d. h. trotz einer Temperaturerhöhung behält der Gegenstand, z. B. ein Längenmeßwerkzeug, seine Gesamtlänge bei. Entsprechendes gilt für Temperaturerniedrigungen.

Der optimale Wickelwinkel hängt u. a. vom Wärmeausdehnungskoeffizienten der verwendeten Fasern ab. Er muß bei Kohlenstoffasern kleiner - gemessen gegen die Hohlzylinderlängsachse - als bei Aramidfasern eingestellt werden, da bei Aramidfasern der negative Ausdehnungskoeffizient größer ist.

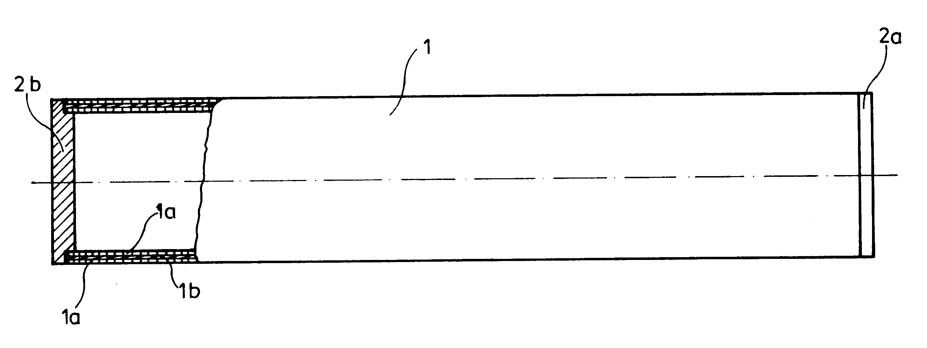

Die Erfindung wird im folgenden anhand eines in der Zeichnung dargestellten Ausführungsbeispieles erläutert:

Die Figur zeigt schematisch ein Eich- oder Endmaß, bestehend aus einem Hohlzylinder 1 aus kohlefaserverstärktem Kunststoff (CFK) und zwei stirnseitigen Endstücken 2a, 2b aus Invar (Ni36). Zur Bildung des Hohlzylinders 1 werden über einen Wickeldorn (nicht dargestellt) abwechselnd Lagen aus Umfangswicklungen 1a und Kreuzwicklungen 1b gewickelt, die nach dem Aushärten des Kunststoffs von dem Wickeldorn abgezogen werden. Die mit dem Kunststoff getränkten Kohlenstoff-Fasern für die Kreuzwicklungen 1b haben einen Wickelwinkel zwischen 15° und 25°, vorzugsweise 15° bis 20°. Bei Verwendung von Aramid-Fasern ist, bezogen auf die Hohlzylinderlängsachse, ein größerer Winkel von ca. 30° vorzusehen. Die Endstücke 2a, 2b haben eine äußere Ringnut, mit der sie in die Stirnseiten des Hohlzylinders 1 eingepaßt und mit diesen verklebt sind. Das gezeigte Längenmeßwerkzeug hat eine Länge von ca. 450 mm bei einer Wandstärke des Hohlzylinders 1 von 2,5 mm und einem absoluten Wärmeausdehnungskoeffizienten von $|\alpha| < 2 \cdot 10^{-7}$ mm/mm°C. Dabei ist es trotz seines geringen Gewichts äußerst formstabil und biegesteif.

In entsprechender Weise können auch Taster, mittels Kupplungselementen zusammenschraubbare Verlängerungsstücke, Prüf- oder Geberkörper gestaltet werden. Die Endstücke können auch die Form von abgerundeten Kappen oder von Kugeln haben und anstelle von Invar z. B. aus einem keramischen Werkstoff, z. B. einer Glaskeramik, oder aus Quarzglas bestehen. Wesentlich ist, daß in allen Fällen die Wärmeausdehnung der Endstücke durch geeignete Wahl des Faserwickelwinkels für die Kreuzwicklungen unter Beachtung des negativen Wärmeausdehnungskoeffizienten des Fasermaterials kompensiert wird. Bei Kohlenstoff-Fasern beträgt das Verhältnis von Kreuz- zu Umfangslagen mehr als 2:1, vorzugsweise etwa 3:1, bei Aramidfasern vorzugsweise 1:2. Für die Umfangswicklungen können erforderlichenfalls auch Fasern mit einem positiven Wärmeausdehnungskoeffizienten in Bezug auf deren Längserstreckung verwendet werden, z. B. Glasfasern.

**Patentansprüche**

1. Langgestreckter Gegenstand hoher Formbeständigkeit und geringer Wärmeausdehnung wie Längenmeßwerkzeug, insbesondere End- oder Eichmaß, Taster oder Prüf- oder Geberkörper, mit einem Hohlzylinder (1) aus Faserverbundwerkstoff und Fasern, die einen negativen Wärmeausdehnungskoeffizienten haben, dadurch gekennzeichnet, daß
   a) der Hohlzylinder (1) aus mehreren, übereinanderliegenden Lagen aus Umfangs- und Kreuzwicklungen (1a, 1b) gewickelt ist, wobei die Kreuzwicklung bzw.-wicklungen (1b) aus den Fasern mit dem negativen Wärmeausdehnungskoeffizienten bestehen, daß
   b) die stirnseitigen Enden des Hohlzylinders mit Endstücken (2a, 2b) in Gestalt von Endkappen, Kugeln oder Kupplungselementen aus einem Material mit positivem Wärmeausdehnungskoeffizienten, hoher Oberflächenhärte und hoher Formbeständigkeit versehen sind, und daß
   c) die Fasern für die Kreuzwicklung bzw. -wicklungen (1b) mit einem Wickelwinkel gewickelt sind, durch den der Hohlzylinder (1) Längenänderungen der Endstücke (2a, 2b) infolge von Temperaturschwankungen kompensiert.

2. Langgestreckter Gegenstand nach Anspruch 1, dadurch gekennzeichnet, daß für die Kreuzwicklung bzw -wicklungen (1b) Kohlenstoff-Fasern mit einem Wickelwinkel von 15° bis 25°, vorzugsweise von 15° bis 20°, bezogen auf die Hohlzylinderlängsachse, vorgesehen sind.

3. Langgestreckter Gegenstand nach Anspruch 1, dadurch gekennzeichnet, daß für die Kreuzwicklung bzw. -wicklungen (1b) Aramid-Fasern mit einem Wickelwinkel von ca. 30°, bezogen auf die Hohlzylinderlängsachse, vorgesehen sind.

4. Langgestreckter Gegenstand nach Anspruch 1, dadurch gekennzeichnet, daß als Material für die Endstücke (2a, 2b) Invar oder ein keramischer Werkstoff, z. B. Glaskeramik, oder Quarzglas vorgesehen ist.

**Claims**

1. Elongate object of high rigidity and low thermal expansion, such as a length-measuring tool, more especially an end-measuring rod or a gauge, a scanner, a testing body or a transmitting body, comprising a hollow cylinder (1) formed from a fibrous compound material and from fibres which have a negative coefficient of thermal expansion, characterised in that
   a) the hollow cylinder (1), formed from a plurality of layers which lie one above the other, is wound from circumferential and crosswise windings (1a, 1b), the crosswise winding or windings (1b) being formed from the fibres having the negative coefficient of thermal expansion, in that
   b) the end faces of the hollow cylinder are provided with end-pieces (2a, 2b) in the form of end caps, balls or coupling elements formed from a material having a positive coefficient of thermal expansion, a high degree of surface hardness and high rigidity, and in that
   c) the fibres for the crosswise winding or windings (1b) are wound at a winding angle, by means of which the hollow cylinder (1) compensates for changes in length of the end-pieces (2a, 2b) as a consequence of temperature variations.

2. Elongate object according to claim 1, characterised in that carbon fibres are provided for the crosswise winding or windings (1b) at a winding angle of 15° to 25°, preferably 15° to 20°, relative to the longitudinal axis of the hollow cylinder.

3. Elongate object according to claim 1, characterised in that aramide fibres are provided for the crosswise winding or windings (1b) at a winding angle of approx. 30°, relative to the longitudinal axis of the hollow cylinder.

4. Elongate object according to claim 1, characterised in that Invar, a ceramic material, e.g. glass ceramics, or quartz glass is provided as the material for the end-pieces (2a, 2b).

**Revendications**

1. Objet allongé de grande stabilité dimensionnelle et de faible dilatation thermique comme un instrument de mesure de longueur, en particulier, un calibre ou une jauge étalon, un palpeur ou une éprouvette ou un corps transmetteur, constitué d'un cylindre creux (1) en matériau composite renforcé par fibres et par des fibres ayant un coefficient de dilatation thermique négatif, caractérisé en ce que :
   a) Le cylindre creux (1) est réalisé avec des couches superposées d'enroulement périphériques et croisés (1a, 1b), l'enroulement ou les enroulements croisé(s) (1b) étant constitué(s) de fibres à coefficient de dilatation thermique négatif.

b) Les extrémités frontales du cylindre creux sont munies de pièces terminales (2a, 2b) sous forme de capuchons, de sphères ou d'éléments de couplage en un matériau à coefficient de dilatation thermique positif, grande dureté superficielle et grande stabilité dimensionnelle et

c) Les fibres pour l'enroulement croisé ou les enroulements croisés (1b) sont enroulées avec un angle d'enroulement, grâce auquel le cylindre creux (1) compense des variations de longueur des pièces terminales (2a, 2b) dues à des fluctuations de température.

2. Objet allongé selon la revendication 1, caractérisé en ce que pour l'enroulement croisé ou les enroulements croisés (1b), on a prévu des fibres de carbone avec un angle d'enroulement de 15° à 25°, de préférence de 15° à 20°, par rapport à l'axe longitudinal du cylindre creux.

3. Objet allongé selon la revendication 1, caractérisé en ce que pour l'enroulement croisé ou les enroulements croisés (1b) des fibres d'aramide sont prévues avec un angle d'enroulement d'environ 30°, par rapport à l'axe longitudinal du cylindre creux.

4. Objet allongé selon la revendication 1, caractérisé en ce que comme matériau des pièces terminales (2a, 2b) on prévoit de l'invar ou un matériau céramique, par exemple du vitrocérame ou du verre quartzeux.